# EUROPÄISCHE PATENTANMELDUNG

(11) **EP 2 063 267 A1**
(43) Veröffentlichungstag der Anmeldung: **27.05.2009**
(21) Anmeldenummer: 07121096.7
(22) Anmeldetag: 20.11.2007
(51) Int. Cl.: G01N 29/11, G01N 29/22, G01N 29/265, G01N 29/40

(54) **Verfahren und Vorrichtung zur Prüfung von Klebstoffverbindungen für Fenster und Türen**

(71) Anmelder: Sika Technology AG, 6340 Baar (CH)
(72) Erfinder: Aegerter, Stefan, 3700 SPIEZ (CH); Buck, Manuel, 5412 GEBENSTORF (CH)
(74) Vertreter: Sika Patent Attorneys

(57) **Zusammenfassung**

Das Verfahren und die Vorrichtung dienen der Prüfung der Qualität einer mittels eines Klebematerials (14) realisierten Verbindung zwischen einer Glasplatte (111, 112) einer Verglasung (11) und einem dazu korrespondierenden Rahmen (12), einem Metall-, Holz- oder Kunststoffrahmen, einer Tür oder eines Fensters. Erfindungsgemäss ist eine Prüfvorrichtung (2) vorgesehen, die einen Ultraschallsender (21), einen Ultraschallempfänger (22), wenigstens eine für die Abgabe und den Empfang von Ultraschallsignalen vorgesehene Messsonde (25), sowie eine der Steuerung und Signalverarbeitung dienende Steuereinheit (23) aufweist. Mittels der Messsonde (25) werden im Bereich der zu prüfenden Verbindung Ultraschallimpulse an die auf dem Klebematerial (25) aufliegende Glasplatte (112) abgegeben und dazu korrespondierende Echoimpulse empfangen, die zumindest bezüglich der Signalintensität ausgewertet werden, um festzustellen, ob das Echosignal durch an der Glasplatte (112) korrekt anhaftendes Klebematerial (13) gedämpft wurde oder ob das Echosignal an der Glasplatte (112) nicht korrekt anhaftendes Klebematerial (13) mit reduzierter Dämpfung passiert hat und dadurch einen vorgesehenen Schwellwert überschreitet.

## Beschreibung

### Technisches Gebiet

Die Erfindung geht aus von einem Verfahren und einer Vorrichtung zur Prüfung von Klebstoffverbindungen für Fenster und Türen, die mit einer Verglasung versehen sind, welche mittels des Klebematerials mit einem Rahmen verbunden ist. Insbesondere betrifft die Erfindung ein Verfahren und eine Vorrichtung zur Prüfung der Qualität der Montage von Verglasungen für Türen und Fenster, die für Gebäude oder Fahrzeuge vorgesehen sind.

### Stand der Technik

Aufgrund der Verwendung von Mehrfachverglasungen haben sich die Isolationseigenschaften von Fenstern in den letzten Jahren deutlich verbessert. Die Wärmedurchgangskoeffizienten für Glas wurden bis auf etwa 0,5 W/m²K gesenkt. Fensterrahmen, mit Wärmedurchgangskoeffizienten von mehr als 2 W/m²K, weisen demgegenüber einen geringeren Wärmeschutz auf. Gute Isolationswerte für die Verglasung und den Rahmen einer Tür oder eines Fensters kommen jedoch nur dann zum Tragen, wenn eine optimale Verbindung zwischen dem Rahmen und der Verglasung erzielt wird. Dazu soll die Verglasung innerhalb des Rahmens stabil gehalten und gleichzeitig die verbleibende Öffnung zwischen Rahmen und Verglasung dicht abgeschlossen werden.

Bei früheren Fenstersystemen wurde dies durch eine grössere Gummidichtung erreicht, mittels der der Rand der Verglasung vollständig umfasst und innerhalb des Rahmens gehalten wurde. Dazu musste die mit Dichtungslippen versehene Gummidichtung vorab in den Rahmen eingelegt werden. Anschliessend wurde die Verglasung, mit Kraft und Geschick, derart in die Gummidichtung eingesetzt, dass das Profil der Gummidichtung einerseits korrekt mit dem Rahmen in Verbindung trat und gleichzeitig den Rand der Verglasung umfasste. Anschliessend wurde sichergestellt, dass die Dichtungslippen korrekt auf der Oberfläche der Verglasung auflagen. Aufgrund des Gewichts der grossflächigen Glasplatten und der oft messerscharfen Kanten war diese Arbeit jeweils mit erheblichem Aufwand verbunden. Nach der Montage der Verglasung wurde die Qualität der Verbindungen optisch geprüft, indem festgestellt wurde, ob die Dichtungslippen der Gummidichtung beidseitig korrekt an der Glasscheibe auflagen und nicht beschädigt waren.

Bei dieser Art der Montage wurden zudem zumeist relativ breite Rahmen verwendet, die ästhetisch unvorteilhaft in Erscheinung traten und auch relativ schlechte Isolationswerte aufwiesen.

Zur Vermeidung dieser Nachteile wurde vorgeschlagen, die Verbindung zwischen dem Rahmen, einem Metall-, Holz- oder Kunststoffrahmen, und der Verglasung mittels eines Klebematerials zu realisieren und die Klebeverbindung mittels einer Dichtungslippe vor eindringendem Wasser zu schützen.

Mit dieser Montageart resultiert ein viel geringerer Montageaufwand. Anstelle einer voluminösen Gummidichtung wird eine dünne Dichtungslippe verwendet, die bequem mit dem Profil des Rahmens verbunden werden kann. Auf einer umlaufenden Schulter auf der Innenseite des Rahmens, vorzugsweise wenige Millimeter von der Dichtungslippe beabstandet, wird das Klebematerial derart aufgelegt, das es eine in sich geschlossene geometrische Form, normalerweise ein Rechteck bildet. Mit dem Auflegen der Verglasung auf das Klebematerial und die Dichtungslippe resultiert in der Folge automatisch eine optimale, stabile und dicht abschliessende Verbindung zwischen dem Rahmen und der Verglasung. Die Klebstoffbahn wird relativ dünn aufgetragen, weshalb der Rahmen entsprechend schmal ausgestaltet werden kann. Im Wesentlichen tritt daher nur noch die Verglasung ästhetisch vorteilhaft in Erscheinung, die einen besseren Isolationswert aufweist, als der Rahmen. Nebst den Vorteilen der verbesserten Ästhetik resultiert mit dieser Technik daher auch ein verbesserter Isolationswert für das gefertigte Fenster beziehungsweise die Tür.

Da der Monteur darauf achtet, dass das Klebematerial korrekt aufgelegt und die Dichtungslippe korrekt in das lange Profil eingesetzt ist, wird angenommen, dass keine Mängel resultieren.

Mit der beschriebenen Technik ist ferner eine Automatisierung des Fertigungsprozesses möglich. Sofern die Dichtungslippe und/oder das Klebematerial mittels eines Automaten aufgetragen werden, kann dieser Arbeitsschritt mittels einer optischen Prüfvorrichtung überwacht werden.

Bei der optischen Prüfung der Montage der Verglasung, entweder durch den Monteur oder durch einen Automaten, kann bei dieser neuen Montageart jedoch nicht abschliessend sichergestellt werden, dass das Klebematerial den Rahmen und die Verglasung an jeder Stelle korrekt miteinander verbindet, weshalb beim Auftreten von Fertigungsmängeln die Gefahr besteht, dass eine mangelhafte Isolation auftreten kann oder sich die Verglasung gar vollständig vom Rahmen ablöst.

Der Erfindung liegt daher die Aufgabe zugrunde, ein Verfahren und eine Vorrichtung anzugeben, mittels derer die Qualität einer anhand eines Klebematerials realisierten Verbindung zwischen einer Verglasung und einem dazu korrespondierenden Rahmen, einem Metall-, Holz- oder Kunststoffrahmen, zuverlässig geprüft werden kann.

Erfindungsgemäss wird dies durch die Merkmale der unabhängigen Patentansprüche 1 und 8 erreicht. Weitere vorteilhafte Ausgestaltungen der Erfindung ergeben sich aus den Unteransprüchen.

Das Verfahren dient der Prüfung der Qualität einer mittels eines Klebematerials realisierten Verbindung zwischen einer Glasplatte einer Verglasung und einem dazu korrespondierenden Rahmen, einem Metall-, Holz- oder Kunststoffrahmen, einer Tür oder eines Fensters bzw. eines Prüfobjekts.

Erfindungsgemäss ist eine Prüfvorrichtung vorgesehen, die einen Ultraschallsender, einen Ultraschallempfänger, wenigstens eine für die Abgabe und den Empfang von Ultraschallsignalen vorgesehene Messsonde, sowie eine der Steuerung und Signalverarbeitung dienende Steuereinheit aufweist. Mittels der wenigstens einen Messsonde werden im Bereich der zu prüfenden Verbindung Ultraschallimpulse an die auf dem Klebematerial aufliegende Glasplatte abgegeben und dazu korrespondierende Echoimpulse empfangen, die zumindest bezüglich der Signalintensität ausgewertet werden, um festzustellen, ob das Echosignal durch an der Glasplatte korrekt anhaftendes Klebematerial gedämpft wurde oder ob das Echosignal an der Glasplatte nicht korrekt anhaftendes Klebematerial mit reduzierter Dämpfung passiert hat und dadurch einen vorgesehenen Schwellwert überschreitet.

Der Schwellwert ist dabei derart gewählt, dass die Signalintensität der Echosignale bei Vorliegen einer qualitativ einwandfreien Verbindung unterhalb dieses Schwellwerts liegt. Die Signalintensität von Echosignal an, die hingegen Zonen passieren, an denen das Klebematerial nicht korrekt an der Glasplatte anhaftet, liegt hingegen über dem gewählten Schwellwert. Von der Messsonde werden daher Ultraschallsignale in die Oberfläche der Glasplatte eingekoppelt, die in Form von Oberflächenwellen von der Messsonde bis zur nächstliegenden Kante der Glasplatte und wieder zurück wandern. Dabei wird das Klebematerial zweimal passiert, weshalb die Oberflächenwellen durch das Klebematerial auch zweimal gedämpft werden. Bei einer optimalen Verbindung beziehungsweise optimalen an Haftung des Klebematerials tritt dabei eine signifikante Reduktion der Signal intensität der Echosignale auf. Sofern das Klebematerial nicht korrekt anhaftet oder abgelöst wurde, so tritt nur eine reduzierte oder gar keine Dämpfung der Echosignale in dieser Zone auf.

Die Messsonde wird dabei etwa 5 cm - 25 cm entfernt vom zu prüfenden Abschnitt der Verbindung mit der Glasplatte gekoppelt und entlang dem zu prüfenden Abschnitt der Verbindung geführt. Während der Verschiebung der Messsonde werden Ultraschallimpulse ausgesendet und Echosignale empfangen und ausgewertet. Vorzugsweise wird die Messsonde im Bereich einer Ecke der Glasplatte aufgesetzt und von einem Seitenende zum anderen geführt. Dabei kann die Messsonde beispielsweise mittels eines Roboterarms aufgesetzt und verschoben werden. In der bevorzugten Ausgestaltung hingegen werden die Prüfobjekte entlang einer Fertigungsstrasse gefördert, die in eine Prüfstrecke einmündet, in der die Messsonden auf das Prüfobjekt aufgesetzt werden. Die Prüfung erfolgt dabei während der weiteren Förderung der Prüfobjekte, ohne den Fertigungsprozess zu verzögern. Die Bewegung der Messsonden erfolgt dabei in Abhängigkeit der Position der Prüfobjekte, die mittels Sensoren bzw. Positionsmeldern erfasst oder vom Anlagenrechner gemeldet werden kann. Beispielsweise werden mittels eines Sensors das frontseitige und das rückseitige Ende eines Prüfobjekts erfasst und der Steuereinheit signalisiert, die die Prüfvorrichtung sowie eine der Verschiebung der Messsonden dienende Antriebsvorrichtung entsprechend steuert. Die erfindungsgemässe Vorrichtung kann daher leicht in eine Fertigungsstrasse integriert und automatisch betrieben werden. Bei der Detektion eines Fehlers bzw. der Detektion von Echosignalen mit Amplituden, die über dem Schwellwert liegen, kann ein Alarm ausgelöst werden. Ferner kann die Fördervorrichtung angehalten oder das fehlerbehaftete Prüfobjekt umgeleitet werden.

Mittels einer oder mehreren Messsonden wird die ringförmig geschlossene Verbindung bzw. das ringförmig geschlossene Klebematerial vollständig oder nur abschnittsweise abgefahren. Beispielsweise kann eine Messsonde mittels eines Roboterarms entlang der Verbindung geführt werden. Zur Vermeidung einer aufwändigen Führungsvorrichtung wird in einer vorzugsweisen Ausgestaltung vorgesehen, dass nur die beiden längeren Seiten der rechteckförmigen Glasplatte je mittels einer Messsonde gleichzeitig abgefahren werden. Dies kann wiederum durch Verschiebung der Messsonden oder durch Verschiebung des Prüfobjekts erfolgen.

Es hat sich gezeigt, dass die Ultraschallsignale optimal in die Oberfläche der Glasplatte eingekoppelt werden können, wenn zwischen der Glasplatte und der Messsonde ein Medium vorgesehen wird. Als besonders vorteilhaft hat sich Wasser als Medium erwiesen. Ferner können auch andere viskose Stoffe verwendet werden.

Vorteilhafte Ergebnisse wurden ferner mit Messsignalen erzielt, deren Frequenz im Bereich von 1,25 MHz bis 3,25 MHz liegt. Idealerweise wird die Frequenz von 2,25 MHz verwendet. Ultraschallimpulse dieser Art werden vorzugsweise mit einer Pulsrepetitionsfrequenz von 10 Hz bis 1000 Hz ausgesendet. Mit der Wahl einer sehr hohen Pulsrepetitionsfrequenz kann die Verbindung nahtlos geprüft werden, währenddem die Messsonde rasch entlang dem Prüfobjekt bzw. das Prüfobjekt rasch entlang der Messsonde gefahren wird.

### Kurze Beschreibung der Zeichnung

Im Folgenden werden anhand der Zeichnungen Ausführungsbeispiele der Erfindung näher erläutert. Gleiche Elemente sind in den verschiedenen Figuren mit den gleichen Bezugszeichen versehen. Es sind nur die für das unmittelbare Verständnis der Erfindung wesentlichen Elemente gezeigt. Die Strömungsrichtung der Medien und die Bewegungsrichtung von Vorrichtungsteilen sind mit Pfeilen angegeben.

Es zeigen:
- Fig. 1: eine erfindungsgemässe Prüfvorrichtung während der Prüfung eines gefertigten Fensters 1; und
- Fig. 2: die Prüfvorrichtung von Figur 1 im Einsatz in einer Fertigungsstrasse.

### Wege zur Ausführung der Erfindung

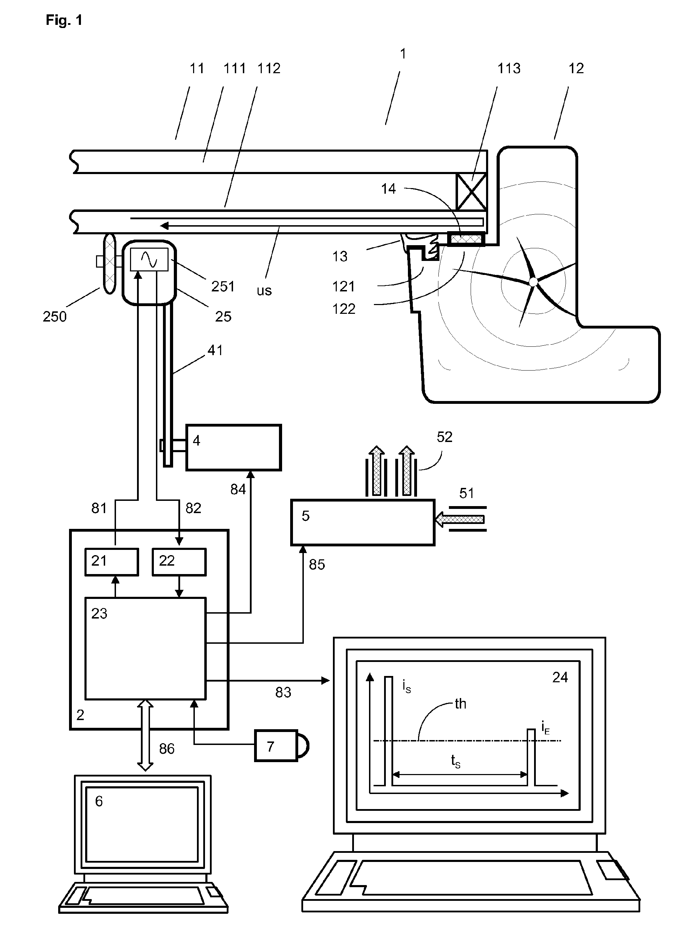

Figur 1 zeigt ein mit einer Verglasung 11 und einem Rahmen 12 versehenes Fenster 1 oder eine Tür im Querschnitt. Bei der Verglasung 11 handelt es sich um ein Verbundglassystem mit zwei Glasplatten 111, 112, die durch ein Verbindungselement 113 miteinander verbunden sind. Der Rahmen 12, im vorliegenden Fall ein Holzrahmen, weist eine der Aufnahme der Verglasung 11 dienende Innenschulter 112 auf, die mit einem Klebeelement 14 versehen ist. Der Rahmen 12 ist z.B. rechteckförmig ausgestaltet, weshalb das Klebematerial 14 einen rechteckförmigen, in sich geschlossenen Ring bildet. Auf der Innenseite der Innenschulter 122 ist ein Profilelement 121 vorgesehen, in das eine Dichtungslippe 13 eingesetzt ist, die ebenfalls einen rechteckförmigen, in sich geschlossenen Ring bildet. Die Verglasung 11 ist mit dem Rand einer der beiden Glasplatten 112 auf die Innenschulter 122 des Rahmens 12 und somit auf das Klebematerial 14 und die Dichtungslippe 13 aufgelegt. Das Klebematerial 14 verbindet daher ein ringförmiges Flächensegment der Innenschulter 122 und ein ringförmiges Flächensegment der Glasplatte 112 miteinander. Sofern die Verbindung an den Flächensegmenten der Innenschulter 122 und der Glasplatte 112 einwandfrei erfolgt, so wird die Verglasung einerseits stabil gehalten, was von zentraler Bedeutung ist. Andererseits wird der Raum zwischen der Glasplatte 112 und dem Rahmen 12 dicht abgeschlossen, was hinsichtlich der angestrebten Isolationseigenschaften des Fensters oder der Tür wichtig ist.

Mittels der Dichtungslippe 13, die ebenfalls an der Glasplatte 112 anliegt, wird dabei verhindert, dass Kondenswasser und Schmutzpartikel in den Bereich zwischen der Innenschulter 122 und der Glasplatte 112 eindringen können. Für die strukturelle Verbindung der Verglasung 11 mit dem Rahmen 12 sowie für eine optimale Isolation ist hingegen das Klebematerial 14 vorgesehen. Dabei ist ersichtlich, dass die optimale Verbindung des Klebematerials 14 mit der Glasplatte 112 nicht mehr optisch geprüft werden kann.

Mangelhafte Kontaktierungen könnten zu einer vollständigen Ablösung der Verglasung führen. Kleinere Mängel der Verbindung wären unter Umständen erst nach der Montage des betreffenden Fensters 1 bzw. der betreffenden Tür 1 durch den Anwender erkennbar. Ein nicht erkannter Mangel könnte beispielsweise zu störenden Einflüssen auf das Raumklima, gegebenenfalls auch zu leicht erhöhten Heizkosten führen. Aus der Sicht des Lieferanten und des Anwenders ist es daher in jedem Fall wünschenswert, wenn nur Fenster mit optimaler Montagequalität ausgeliefert werden.

Die Detektion von Fertigungsmängeln erfolgt vorteilhaft mit der in Figur eins gezeigten Prüfvorrichtung 2, die einen Ultraschallsender 21, einen Ultraschallempfänger 22, wenigstens eine für die Abgabe und den Empfang von Ultraschallsignalen vorgesehene Messsonde 25, sowie eine der Steuerung und Signalverarbeitung dienende Steuereinheit 23 aufweist. Ferner ist eine Anzeigeeinheit 24 vorgesehenen, auf der die Messeresultate angezeigt werden können. Die Prüfvorrichtung kaum vorteilhaft in einen Personalcomputer integriert werden, in den auch analoge Baugruppen eingesetzt werden können.

In Figur 1 ist gezeigt, dass die Steuereinheit 23 den Ultraschallsender 21 zur Abgabe von Ultraschallimpulsen veranlassen kann, die über eine Leitung 81 zur Messsonde 25 bzw. Zu einem darin vorgesehenen elektromechanischen Wandler 251 geführt werden. Von diesem Wandler 251, beispielsweise einem piezo-elektrischen Element, werden die mechanischen Schwingungen in die Oberfläche der Glasplatte 112 eingekoppelt. Die eingekoppelten Oberflächenwellen wandern in der Folge bis zum Rand der Glasplatte 112 und werden dort reflektiert und nach einer entsprechenden Verzögerung vom Wandler 251 wieder erfasst. Dabei passiert das Signal sowohl die Dichtungslippe 13 als auch das Klebematerial 14 zwei Mal (siehe das eingezeichnete Signal us). Aufgrund der schwachen Ankopplung der Dichtungslippe 13 ist diese nicht geeignet, das Signal signifikant zu dämpfen. Eine wesentliche Dämpfung erfahren die Oberflächenwellen hingegen durch das Klebeelement 14, sofern dieses flächig an der Glasplatte 112 anhaftet.

Vom Wandler 251 der Messsonde 25 werden die Echosignale erfasst und über eine Leitung 82 zum Ultraschallempfänger 22 geführt, indem sie vorzugsweise vorverstärkt, gegebenenfalls gefiltert, und digitalisiert werden. Zur Optimierung der Prüfvorrichtung kann auch eine Messsonde mit zwei Wandlern 251 verwendet werden. Für den Empfang der Echosignale kann ein Wandler 251 verwendet werden, der eine höhere Signalempfindlichkeit aufweist. In der Steuereinheit 23, in der vorzugsweise ein Signalprozessor vorhanden ist, wird die Amplitude der Echosignale mit einem Schwellwert verglichen. Sofern der entsprechend gewählte Schwellwert überschritten wird, liegt eine ungenügende Dämpfung der empfangenen Signale vor, woraus auf eine mangelhafte Anhaftung des Klebematerials zu schliessen ist. Einen solchen Fall zeigt die Anzeigeeinheit 24. Dort ist gezeigt, dass auf einen Sendeimpuls i_{S} nach einer Zeit t_{S} ein Echoimpuls i_{E} folgt, dessen Amplitude über dem Schwellwert th liegt. In diesem Fall wird angenommen, dass das Klebematerial nur mangelhaft an der Glasplatte 112 anhaftet. Die Steuereinheit 23 kann den detektierten Mangel optisch oder akustisch signalisieren oder über einen Datenbus 86 an den Anlagenrechner 6 melden, der beispielsweise die Weichen der Fertigungsstrasse derart stellt, dass das mangelhafte Produkt zu einer Reparaturstrasse umgeleitet wird.

Der Anlagenrechner 6 kann dabei nicht nur für die Steuerung des Fertigungsprozesses, sondern auch für die Steuerung des Prüfprozesses verwendet werden. Alternativ kann der Prüfprozess auch an den Fertigungsprozess angekoppelt werden, indem dieser mittels Sensoren, beispielsweise Lichtschranken 7 überwacht wird. Nach der Detektion des Eintreffens eines Prüfobjekts 1 kann der Prüfprozess aktiviert werden, wonach die Messsonde 25 gegen das Prüfobjekt 1 geführt und an die Glasplatte 112 angekoppelt wird. Dazu gibt die Steuereinheit 23 über eine Leitung 84 Steuersignale an eine Antriebsvorrichtung 4 ab, die eine Halterung 41 antreibt, an der die Messsonde 25 montiert ist. Durch Betätigung der Antriebsvorrichtung 4 kann die Messsonde 25 somit, in Abhängigkeit der Phase des Prüfprozesses, angehoben und abgesenkt werden.

Für die optimale Ankopplung der Messsonde 25 an die Glasplatte 112 wird vorzugsweise ein Medium 51, vorzugsweise Wasser oder ein viskoses Material verwendet. Die Verwendung von Wasser ist besonders vorteilhaft, da dieses den Kontaktstellen mit geringem Aufwand zuführbar ist, keine Materialkosten verursacht und anschliessend nicht entfernt werden muss. Das Wasser kann auf verschiedene Weise auf die Glasplatte 112 aufgebracht werden. Beispielsweise wird das Wasser auf die Glasplatten 112 aufgespritzt, sobald die Prüfobjekte 1 in die Prüfstrecke einfahren. Das Wasser kann den Kontaktstellen auch punktuell über wenigstens ein Verteilelement 52, z.B. einen Wasserschlauch, zugeführt werden, sobald die Messsonden 25 an die Glasplatte 112 angekoppelt werden. In der Anordnung von Figur 1 ist ein Steuerelement 5 gezeigt, das über eine Steuerleitung 85 mit der Steuereinheit 23 verbunden ist. Das Steuerelement 5 ist dabei derart steuerbar, dass über eine Leitung zugeführtes Wasser 51 den Kontaktstellen über eines oder mehrere Verteilelemente 52 wahlweise zuführbar ist. Die Verwendung von Wasser 51 erlaubt es somit, die Messsonden 25 mit der Glasplatte 112 zu koppeln, ohne diese unmittelbar zu berühren. Die Messsonde 25 kann daher in einem erforderlichen Abstand zur Glasplatte 112 gekoppelt gehalten werden, während diese relativ gegeneinander verschoben werden, ohne dass Kollisionen auftreten. Aufgrund der Verwendung von Wasser 51 kann daher die gesamte Prüfung störungsfrei durchgeführt werden. Dies ist in der Praxis besonders wichtig, da bei den normalerweise verwendeten Fördervorrichtungen 9 störende Vibrationen oder Bewegungen meist kaum zu vermeiden sind.

In einer vorzugsweisen Ausgestaltung (siehe Figur 1) wird die wenigstens eine Messsonde 25 vorzugsweise elastisch oder verschiebbar gelagert und derart mit einem Laufrad 250 oder einem Gleitelement versehen, dass der ideale Abstand zur Glasplatte 112 auch dann eingehalten wird, wenn die Fördervorrichtung 9 nicht in der Lage ist, die lineare Bewegung der Glasplatte 112 zu gewährleisten. Das Laufrad 250 bzw. das Gleitelement wird vorzugsweise derart vorgesehen, dass es die Glasplatte 112 nicht im Bereich des Signalpfades berührt. Bei dieser Ausgestaltung der Vorrichtung können sequentiell auch unterschiedliche Prüfobjekte 1 gefördert werden, ohne dass Anpassungen der Vorrichtung erforderlich sind. Aufwendige Mess- und Steuervorrichtungen, mittels derer der ideale Abstand gemessen und die Messsonde 25 nachgeführt wird, erübrigen sich in diesem Fall.

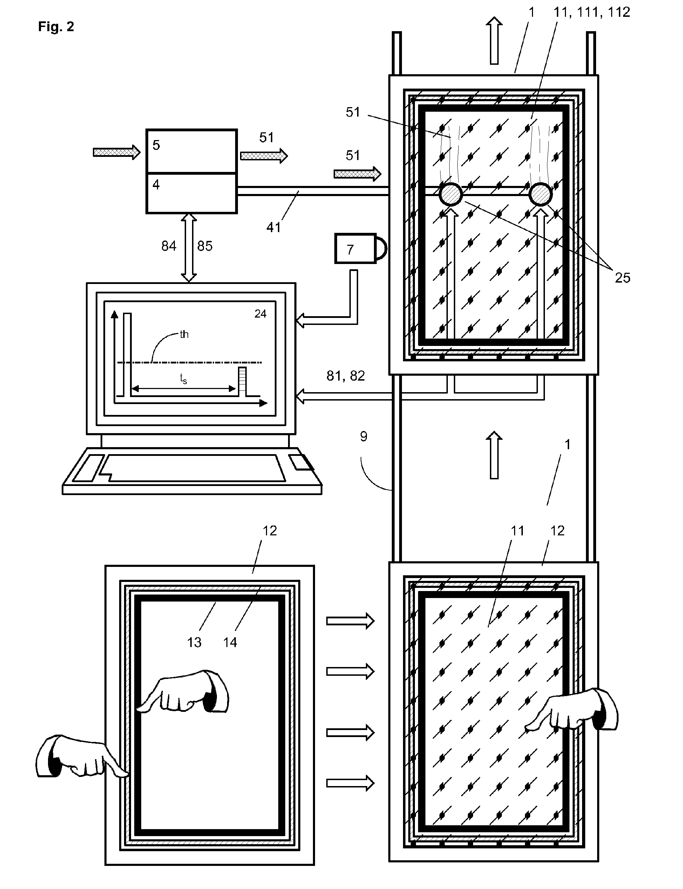

Figur 2 zeigt die erfindungsgemässe Vorrichtung im praktischen Einsatz. Ferner sind in Figur 2 die wesentlichen Schritte der Fertigung der Prüfobjekte 1 gezeigt. In einem ersten Schritt werden das Klebematerial 14 und die Dichtungslippe 13 mit dem Rahmen 12 verbunden bzw. auf dessen Innenschulter montiert. In der Folge wird die Verglasung 11 aufgesetzt. Anschliessend wird das so weit fertig gestellte Prüfobjekt 1 mit einer Fördervorrichtung 9 zur Prüfstrecke hin gefördert. Dort wird das Eintreffen des Prüfobjekts 1 entweder durch den Anlagenrechner 6 signalisiert oder mittels einer Lichtschranke 7 detektiert. Die Steuereinheit 23 der Prüfvorrichtung 2 startet in der Folge den Prüfprozess und veranlasst die Antriebsvorrichtung 4, die beiden vorgesehenen Messsonden 25 von unten gegen die untere Glasplatte 112 der Verglasung 11 zu führen. Ferner wird den Stellen, an denen die Messsonden 25 die Glasplatte 105 kontaktieren, Wasser 51 zugeführt, damit die Ultraschallimpulse und die Echosignale optimal eingekoppelt bzw. ausgekoppelt werden können.

Währenddem die Messsonde 25 Ultraschallimpulse aussendet und Echosignale empfängt wird das das Prüfobjekt 1 weiter gefördert. In Figur 2 ist gezeigt, dass mittels der Messsonden 25 bereits rund ein Drittel der Strecke abgefahren wurde, entlang der die Verbindung zu prüfen ist. Es ist gezeigt, dass jede der Messsonden 25 nahe einem Rand der Glasplatte 112 angekoppelt ist, so dass die Verbindung entlang den Längsseiten des Prüfobjekts 1 abgefahren wird. Dabei wird angenommen, dass beim Auftreten von Fehlern diese sich normalerweise an den Längsseiten zeigen, an denen unter Umständen eine reduzierte Flächenpressung auftritt. Auf diese Weise können somit die wesentlichen Fehler mit minimalem Aufwand ermittelt werden. Mit etwas höherem Aufwand können jedoch auch die Verbindungen an den kürzeren Seiten des Prüfobjekts 1 geprüft werden. Dazu wird vorgesehen, dass vorzugsweise eine der beiden Messsonden 25 auch quer zur Laufrichtung der Prüfobjekte 1 verschoben werden kann. Die Prüfobjekte 1 werden dabei an passender Stelle angehalten, wonach der kürzere Seitenrand der Glasplatten 112 mittels der dafür vorgesehenen Messsonde 25 abgefahren wird. Kurz nach dem Aufsetzen der Messsonden 25, zu Beginn des Prüfprozesses, und kurz vor dem Abheben der Messsonden 25, gegen Ende des Prüfprozesses, kann eine der Messsonden 25 daher entlang der kürzeren Seite der Glasplatte verfahren werden, um die Qualität der dortigen Verbindung zu prüfen. Durch diese Massnahme gelingt es, die Qualität der Prüfobjekte 1 uneingeschränkt zu prüfen. Besonders vorteilhaft bei der in Figur 2 gezeigten Anordnung ist, dass sich der Prüfprozess nahtlos in den Fertigungsprozess einbinden lässt. Wie bereits ausgeführt, können Informationen aus dem Fertigungsprozess in den Prüfprozess übernommen werden, so dass sich der Aufwand weiter reduziert.

Die erfindungsgemässe Vorrichtung lässt sich ferner mit einfachen Massnahmen an geänderte Fertigungsprozesse und geänderte Prüfobjekte 1 anpassen. Ferner ist es möglich, die empfangenen Echosignale nicht nur hinsichtlich der Signalintensität auszuwerten. Zusätzlich oder alternativ ist es auch möglich, Signalverläufe und/oder Signalmuster aufzuzeichnen und mit gespeicherten Werten zu vergleichen. Auf diese Weise können weitere Informationen gewonnen und weitere Mängel detektiert werden, die ein entsprechendes Signalmuster verursachen. Sofern beispielsweise die Dichtungslippe nicht korrekt aufgelegt ist oder der Rahmen Verformungen aufweist, können dafür typische Signalmuster auftreten und detektiert werden. Ferner kann auch aufgezeichnet werden, an welcher Stelle des Rahmens eine mangelhafte Verbindung vorliegt.

### Bezugszeichenliste

- 1: Element mit einer Verglasung, wie Fenster oder Tür
- 11: Verglasung mit zwei Glasplatten 111, 112
- 111: erste Glasplatte
- 112: zweite Glasplatte
- 113: Elemente zur Verbindung der Glasplatten 111, 112
- 12: Rahmen
- 121: Profilelement des Rahmens 12
- 122: Innenschulter
- 13: Dichtungslippe eingesetzt in das Profilelement 121
- 14: Klebematerial aufgetragen auf die Innenschulter 122
- 2: Prüfvorrichtung
- 21: Sendeeinheit
- 22: Empfangseinheit
- 23: Steuereinheit
- 24: Anzeigeeinheit
- 25: Messsonde
- 251: Wandler
- 4: Antriebsvorrichtung
- 41: Halterung
- 5: Steuerelement für ein Medium 51
- 51: Medium, wie Wasser oder ein viskoses Material
- 52: Verteilelemente
- 6: Anlagenrechner
- 7: Sensor
- 81, ..., 86: elektrische Verbindungen
- 9: Fördervorrichtung

## Patentansprüche

1. Verfahren zur Prüfung der Qualität einer mittels eines Klebematerials (14) realisierten Verbindung zwischen einer Glasplatte (111, 112) einer Verglasung (11) und einem dazu korrespondierenden Rahmen (12), einem Metall-, Holz- oder Kunststoffrahmen, einer Tür oder eines Fensters, **dadurch gekennzeichnet, dass** eine Prüfvorrichtung (2) vorgesehen ist, die einen Ultraschallsender (21), einen Ultraschallempfänger (22), wenigstens eine für die Abgabe und den Empfang von Ultraschallsignalen vorgesehene Messsonde (25), sowie eine der Steuerung und Signalverarbeitung dienende Steuereinheit (23) aufweist, dass mittels der wenigstens einen Messsonde (25) im Bereich der zu prüfenden Verbindung Ultraschallimpulse an die auf dem Klebematerial (25) aufliegende Glasplatte (112) abgegeben und dazu korrespondierende Echoimpulse empfangen werden, die zumindest bezüglich der Signalintensität ausgewertet werden, um festzustellen, ob das Echosignal durch an der Glasplatte (112) korrekt anhaftendes Klebematerial (13) gedämpft wurde oder ob das Echosignal an der Glasplatte (112) nicht korrekt anhaftendes Klebematerial (13) mit reduzierter Dämpfung passiert hat und **dadurch** einen vorgesehenen Schwellwert überschreitet.

2. Verfahren nach Anspruch 1, **dadurch gekennzeichnet, dass** die wenigstens eine Messsonde (25) etwa 5cm - 25 cm entfernt vom zu prüfenden Abschnitt der Verbindung vorzugsweise im Bereich einer Ecke der Glasplatte (112) aufgesetzt und von einem Seitenende zum anderen geführt wird, indem entweder die Messsonde (25) oder das Prüfobjekt (1) verschoben werden, wobei Ultraschallimpulse vorzugsweise regelmässig abgegeben und empfangen werden.

3. Verfahren nach Anspruch 1 oder 2, **dadurch gekennzeichnet, dass** mittels einer oder mehreren Messsonden (5) die ringförmig geschlossene Verbindung bzw. das ringförmig geschlossene Klebematerial (13) vollständig oder nur abschnittsweise abgefahren wird.

4. Verfahren nach Anspruch 3, **dadurch gekennzeichnet, dass** nur die beiden längeren Seiten der rechteckförmigen Glasplatte (112) je mittels einer Messsonde (5) gleichzeitig abgefahren werden.

5. Verfahren nach Anspruch 3 oder 4, **dadurch gekennzeichnet, dass** die Prüfobjekte (1) bzw. die Fenster oder Türen innerhalb einer Prüfstrecke linear verschoben werden, wobei beim Eintreffen eines Prüfobjekts (1) die Messsonden (25) auf die Glasplatte (112) abgesenkt oder gegen die Glasplatte (112) angehoben und nach Abschluss des Prüfprozesses wieder entfernt werden.

6. Verfahren nach einem der Ansprüche 1-5, **dadurch gekennzeichnet, dass** die Ankopplung der Messsonden (25) an die Glasplatte (112) über ein Medium (51), insbesondere Wasser oder ein viskoser Stoff, erfolgt, das der Glasplatte (112) von einem Steuerelement (5) über Verteilelemente (52) zugeführt wird, die gegebenenfalls mit den Messsonden (25) gekoppelt sind.

7. Verfahren nach einem der Ansprüche 1-6, **dadurch gekennzeichnet, dass** die Frequenz der Ultraschallsignale im Bereich von 1,25 MHz bis 3,25 MHz, vorzugsweise bei 2,25 MHz liegt und dass die Ultraschallimpulse mit einer Pulsrepetitionsfrequenz von 10 Hz bis 1000 Hz abgegeben werden.

8. Vorrichtung zur Prüfung der Qualität einer mittels eines Klebematerials (14) realisierten Verbindung zwischen einer Glasplatte (112) einer Verglasung (11) und einem dazu korrespondierenden Rahmen (12), einem Metall-, Holz- oder Kunststoffrahmen, einer Tür oder eines Fensters (1) bzw. eines Prüfobjekts, mit einer Prüfvorrichtung (2), die einen Ultraschallsender (21), einen Ultraschallempfänger (22), wenigstens eine für die Abgabe und den Empfang von Ultraschallsignalen vorgesehene Messsonde (25), sowie eine der Steuerung und Signalverarbeitung dienende Steuereinheit (23) aufweist, **dadurch gekennzeichnet, dass** eine Fördervorrichtung (9) vorgesehen ist, mittels der die Prüfobjekte (1) entlang einer Prüfstrecke förderbar sind, dass die wenigstens eine Messsonde (25) mit einer Halterung (41) verbunden ist, die von einer Antriebsvorrichtung (4) zwischen einer ersten Position, in der die Messsonde (4) am Prüfobjekt (1) anliegt, und einer zweiten Position bewegbar ist, in der die Messsonde (4) vom Prüfobjekt (1) entfernt ist, und dass die Prüfvorrichtung (2), die Antriebsvorrichtung (4) und gegebenenfalls die Fördervorrichtung (9) derart steuerbar sind, dass beim Eintreffen eines Prüfobjekts (1) die Messsonde (25) mit dem Prüfobjekt (1) solange koppelbar ist und Ultraschallsignale senden und empfangen kann, bis der zu prüfende Abschnitt der Verbindung abgefahren ist.

9. Vorrichtung nach Anspruch 8, **dadurch gekennzeichnet, dass** die Halterung (41) zwei Messsonden (25) trägt, von denen jede an dem zugeordneten seitlichen Rand des Prüfobjekts (1) der Glasplatte (112) zuführbar ist.

10. Vorrichtung nach Anspruch 8 oder 9, **dadurch gekennzeichnet, dass** die Steuerung der Prüfvorrichtung (2), der Antriebsvorrichtung (4) und der Fördervorrichtung (9) mittels eines Anlagenrechners (6) erfolgt oder dass die Steuerung der Prüfvorrichtung (2) und der Antriebsvorrichtung (4) mittels der in der Prüfvorrichtung (2) vorgesehenen Steuereinheit (23) erfolgt, die mit wenigstens einem Sensor (7), vorzugsweise einer Lichtschranke, verbunden ist, mittels dessen wenigstens eine Position eines eintreffenden Prüfobjekts (1) erfassbar ist.

11. Vorrichtung nach Anspruch 8, 9 oder 10, **dadurch gekennzeichnet, dass** ein Steuerelement (5) vorgesehen ist, mittels dessen der Glasplatte (112) zumindest im Bereich der Ankopplung der Messsonden (25) über Verteilelemente (52) ein Medium (51), insbesondere Wasser oder ein viskoser Stoff, zuführbar ist.

12. Vorrichtung nach einem der Ansprüche 8 bis 11, **dadurch gekennzeichnet, dass** die wenigstens eine Messsonde (25) einen Wandler (251) für die Abgabe und den Empfang der Ultraschallsignale oder einen Wandler (251) für die Abgabe und einen Wandler (251) für den Empfang der Ultraschallsignale aufweist.

13. Vorrichtung nach einem der Ansprüche 8 bis 12, **dadurch gekennzeichnet, dass** die wenigstens eine Messsonde (25) mit einem Laufrad oder einem Gleitelement versehen ist, welches die Messsonde (25) während der Relativverschiebung der Messsonde (25) und der Glasplatte (112) in konstantem Abstand voneinander hält.
